# EUROPEAN PATENT APPLICATION

(11) **EP 1 640 791 A1**
(43) Date of publication of application: **29.03.2006**
(21) Application number: 05020810.7
(22) Date of filing: 23.09.2005
(51) Int. Cl.: G02F 1/13, H04M 1/02

(54) **Liquid crystal display device**

(30) Priority: 24.09.2004 JP 2004276930; 24.09.2004 JP 2004276931
(71) Applicant: SANYO ELECTRIC CO., LTD., Moriguchi-shi, Osaka (JP); Tottori Sanyo Electric Co., Ltd., Tottori-shi, Tottori (JP)
(72) Inventor: Hayano, Satoshi, Tottori-shi Tottori (JP); Kishi, Hideaki, Tottori-shi Tottori (JP)
(74) Representative: HOFFMANN EITLE

(57) **Abstract**

A liquid crystal display device 10 where a first liquid crystal display panel 15 is disposed on one side of a light guiding plate 11 that leads out light severally to both of the front and rear sides of the light guiding plate, a smaller second liquid crystal display panel 30 disposed on the other side of the light guiding plate, and the panels and the light guiding plate are stacked, in which a reinforcing frame 25 comprising a thin plate, which is substantially of the same size as the light guiding plate 11 and has an opening 26 substantially as large as the display surface of the second liquid crystal display panel 30, is laid between the light guiding plate 11 and the second liquid crystal display panel 30, the frame being covered by a cover 40 having an opening 42 corresponding to the display surface of the second liquid crystal display panel 30, such that the reinforcing frame 25 and the cover 40 sandwich and fix the second liquid crystal display panel 30. Consequently, a liquid crystal display device is provided with a slimmer structure while retaining a predetermined mechanical strength and assembly thereof is simplified.

## Description

### Field of the Invention

The present invention relates to a liquid crystal display device capable of double-side irradiation by one backlight unit.

### Background Art

In recent years, mobile phones, PDAs or mobile-type information terminals that function as telephones and are capable of displaying more messages than ever have been commercially produced on a wider scale. Among these devices, mobile phones in particular are now capable of connecting to the Internet and even include various functions such as e-mail, information search, and navigation by displaying maps and guiding the user to certain destinations. In the future, more types of software are even expected to be installed in these devices, and as such, they have become indispensable to everyday life.

Since the installation of such various types of software has become possible, there has been a continuing demand for lighter, portable and more convenient to use mobile phones, such that different kinds of mobile phones have been developed and commercially produced.

Such kind of mobile phones are roughly divided into two: the bar type and the folding type. The folding type, in which liquid crystal display panels are installed on both (the front and rear) sides of the mobile phone to enable caller identification or display time or the like, even when the phone is closed, have recently become widespread.

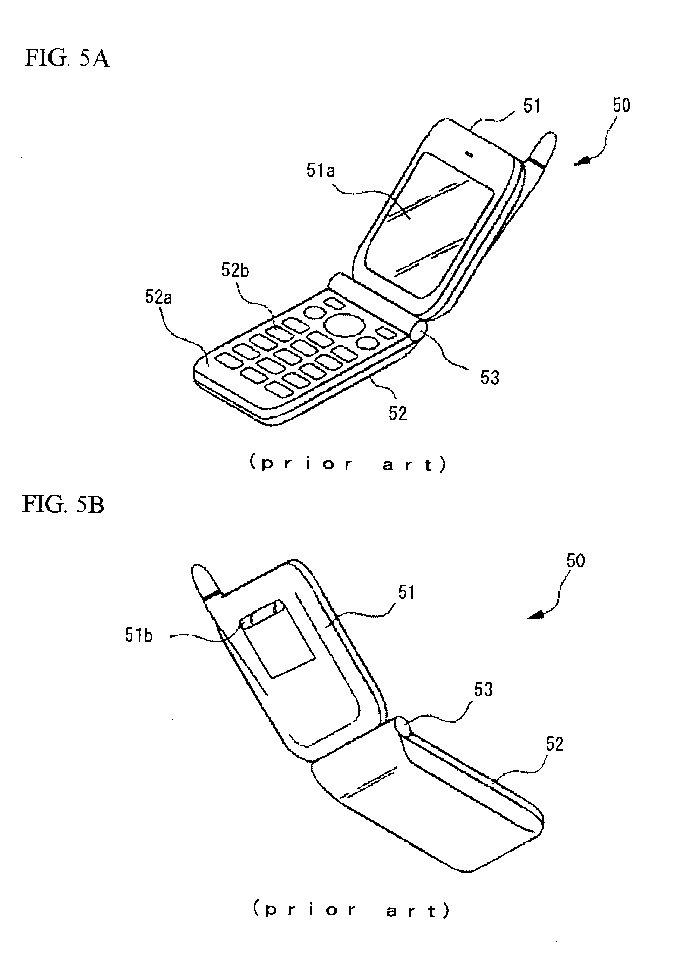

Fig. 5 shows a conventional folding type of mobile phone, where Fig. 5A is a perspective view of the phone viewed from one direction when it is open or in use, and Fig. 5B is a perspective view of the phone viewed from another direction.

As shown in Figs. 5A and 5B, the folding type mobile phone 50 generally comprises an upper housing 51 and a lower housing 52 connected together by a hinge mechanism 53 in a freely openable and closable manner, whereby a double-side emission type liquid crystal display panel is provided for the upper housing 51, and an operation panel 52a of the lower housing 52 is provided with an input keyboard 52b for performing dial operation or the like.

The double-side emission type liquid crystal display panel consists of a main liquid crystal display panel 51a whose main display surface serves as the main operation face of the mobile phone and an auxiliary liquid crystal display panel 51b disposed on the exterior surface of the upper housing 51 of the mobile phone 50.

According to the mobile phone 50 with such an installed liquid crystal display panel, the auxiliary liquid crystal display panel 51b is located on the exterior surface of the upper housing 51 even when both housings 51, 52 are folded by the hinge mechanism 53, so that various information can be viewed from the auxiliary display surface without opening both housings 51, 52.

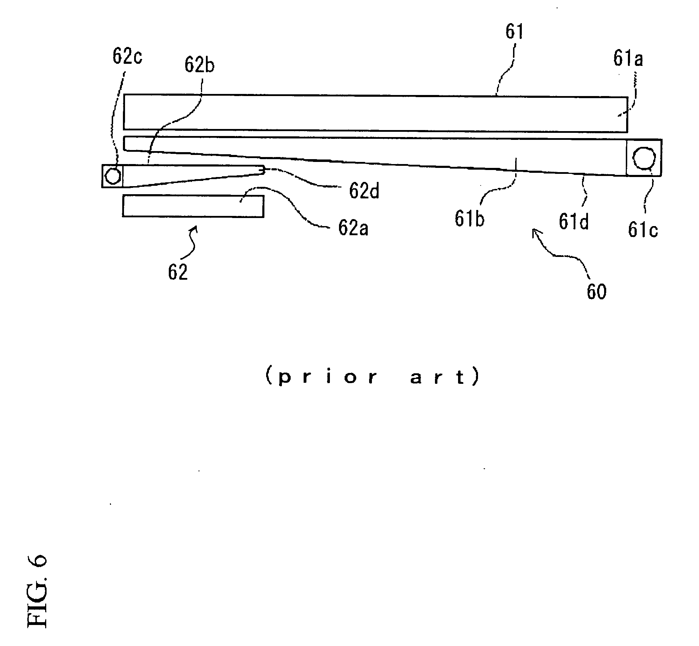

Fig. 6 is a side view schematically showing a publicly known liquid crystal display panel used in this type of folding mobile phone.

The liquid crystal display panel 60 includes a main liquid crystal display panel 61 functioning as the main display surface and an auxiliary liquid crystal display panel 62 acting as the auxiliary display surface, where the main liquid crystal display panel 61 consists of a semi-transmissive liquid crystal display panel 61a and a main backlight 61b irradiating the liquid crystal display panel 61a, with the main backlight 61b comprising a light source 61c and a light guiding plate 61d.

Further, the auxiliary liquid crystal display panel 62 includes a smaller semi-transmissive liquid crystal display panel 62a compared to the main liquid crystal display panel 61 and an auxiliary backlight 62b irradiating the liquid crystal display panel 62a, with the auxiliary backlight 62b being made up of a light source 62c and a light guiding plate 62d.

However, since the liquid crystal display panel 60 requires the main backlight 61b and the auxiliary backlight 62b for the main and auxiliary liquid crystal display panels 61, 62 respectively, the light sources 61c, 62c are in turn necessary for each backlight, resulting in a larger mobile phone with a greater number of parts. To address such problems, a double-sided liquid crystal display device capable of irradiating two liquid crystal display panels by only one backlight unit has been introduced in Japanese Laid-Open Patent Publication No. 2002-287144 publication (Fig. 4, columns [0025] to [0030]), for example.

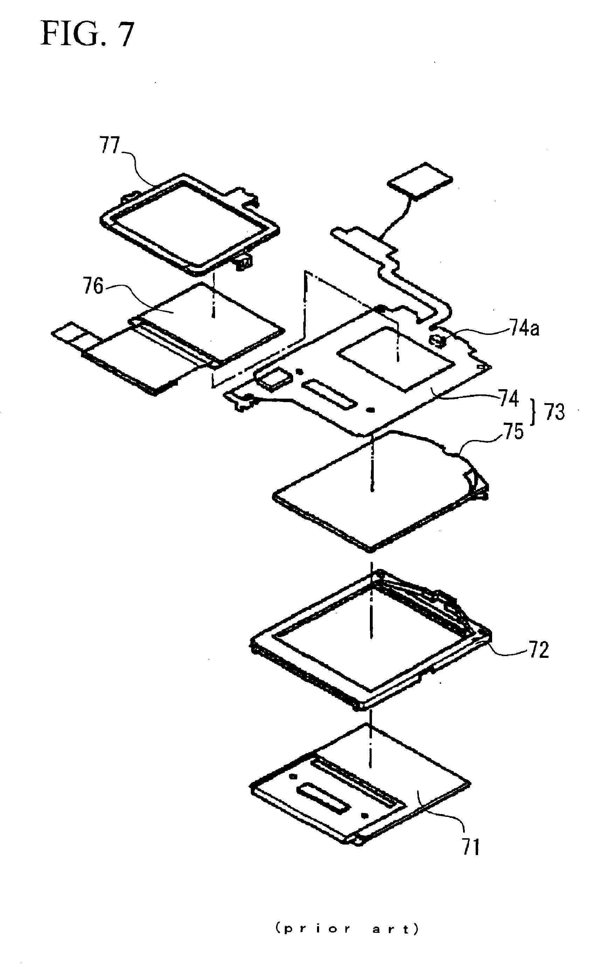

Fig. 7 is an exploded perspective view of the double-sided liquid crystal display device described in the abovementioned patent document, where the double-sided liquid crystal display device includes an inner liquid crystal display panel 71 functioning as the main liquid crystal display panel, a holder 72 for housing the main liquid crystal display panel 71, a backlight unit 73 and an outer liquid crystal display panel 76, that is, the auxiliary liquid crystal display panel earlier referred to, where the backlight unit 73 consists of a light guiding plate 75 and a flexible board 74.

The backlight unit 73 of the aforesaid double-sided liquid crystal display device is assembled in the following manner. Firstly, the light guiding plate 75 is inserted into the inner portion of the holder 72, and the liquid crystal display panel 71 is attached to the bottom surface of the light guiding plate 75, atop which the flexible board 74 is disposed. The outer liquid crystal display panel 76 is then affixed to the holder 72 by a frame body 77 on top of the flexible board 74. Furthermore, an emission source LED 74a is formed on one side of the flexible board 74.

### Disclosure of the Invention

However, since the above-described publicly known liquid crystal display panel 60 requires two sets of backlight units represented by the main backlight 61b and the auxiliary backlight 62b, the number of parts increases, leading to greater manufacturing cost and making assembly more complicated, while product thickness also increases.

On the other hand, since the two (main and auxiliary) liquid crystal display panels in the double-sided liquid crystal display device described above can share one backlight unit, there is no need to provide for another backlight unit.

However, due to the constitution of the double-sided liquid crystal display device in that the inner and outer liquid crystal display panels are disposed on the front and rear portions of the light guiding plate and are supported by the light guiding plate, the light guiding plate must have a certain level of mechanical strength, which however renders it impossible to make the light guiding plate thinner. On the other hand, the light guiding plate cannot be made sufficiently mechanically strong because it is housed only in the holder, while the frame body remains necessary to fix the outer liquid crystal display panel, thereby increasing the number of parts as to make it difficult to design a thinner liquid crystal display panel.

In addition, since the presently described double-sided liquid crystal display device does not deal with the problem of noise, certain difficulties arise when it is applied to the mobile phone.

Consequently, the present invention has been created to solve the problems besetting the above-described prior art and aims to provide a liquid crystal display device with a double-side emission type light guiding plate, whose predetermined mechanical strength is maintained while producing a slimmer mobile information terminal that is simpler to assemble.

### SUMMARY OF THE INVENTION

To achieve the above-mentioned objective, Claim 1 of the present invention aims to provide a liquid crystal display device where a first liquid crystal display panel is disposed on one side of a light guiding plate that leads out light severally to both the front and rear sides thereof, a second liquid crystal display panel smaller than the first liquid crystal display panel is disposed on the other side of the light guiding plate, whereby the panels and the light guiding plate are stacked, and a reinforcing frame comprising a thin plate, which is substantially of the same size as the light guiding plate and has an opening substantially as large as the display surface of the second liquid crystal display panel, is laid between the light guiding plate and the second liquid crystal display panel, the frame being covered by a cover having an opening corresponding to the display surface of the second liquid crystal display panel, and the reinforcing frame and the cover sandwich and fix the second liquid crystal display panel.

Further, Claim 2 of the invention provides for a liquid crystal display device according to Claim 1, wherein a plurality of protrusions being formed around the opening of the said reinforcing frame, and the second liquid crystal display panel being aligned by such protrusions.

Further, Claim 3 of the invention provides for a liquid crystal display device according to Claim 1 or 2, wherein the reinforcing frame comprises a metal member.

Further, Claim 4 of the invention provides for a liquid crystal display device according to Claim 1 or 2, wherein a circuit board for installing semiconductor devices and the like for driving the liquid crystal display panels is disposed between the reinforcing frame and the cover.

Furthermore, Claim 5 of the invention provides for a liquid crystal display device according to Claim 4, wherein double-faced adhesive tape is attached to the surface of the reinforcing frame, and the circuit board is affixed on one side of the double-faced adhesive tape.

Further, Claim 6 of the invention provides for a liquid crystal display device according to Claim 1 or 2, wherein the display device includes a picture frame-shaped frame body large enough to house the light guiding plate or the like, and the light guiding plate, a light source irradiating light from one end of thereof, and the first liquid crystal display panel are fitted into the frame body.

According to the present invention, the above-described means produces excellent effects as shown below. Specifically, by stacking the first liquid crystal display panel, the light guiding plate and the second liquid crystal display panel together with the reinforcing frame comprising a thin plate laid between the light guiding plate and the second liquid crystal display panel, the reinforcing frame effectively supports the stacked body while mechanically reinforcing the same even if the first and second liquid crystal display panels and the light guiding plate are made thinner. Thus, the thickness of the stacked body consisting of the light guiding plate and the first and second liquid crystal display panels can still be made thinner despite the addition of the reinforcing frame, and consequently, the entire liquid crystal display device can be made even slimmer.

Further, since the second liquid crystal display panel is aligned by the reinforcing frame and can be integrally fixed by the cover, a fixing frame which has been required in the prior art for fixing the second liquid crystal display panel, becomes unnecessary, such that the number of parts can be reduced, thereby simplifying assembly work.

In addition, the prior art does not provide for such cover. Even if a cover were to be installed, however, molding thereof would be difficult because the second liquid crystal display panel is in a protruding position. This problem can however be solved by using the cover where the display surface of the second liquid crystal display panel is exposed from the op ening.

Further, by disposing the circuit board between the reinforcing frame and the cover, wirings, devices and the like installed on the circuit board are covered by the cover, making it possible to protect these parts from contact or the like with an obstacle. Additionally, if the reinforcing frame and the cover are made of metallic material, good electric connection with the circuit board can be established. Furthermore, since the circuit board and the like can be further protected by attaching insulating material on the inner surface of the cover, electromagnetic interference can be also reduced.

Meanwhile, by providing on the circuit board an opening large enough to allow the display surface of the second liquid crystal display panel to fit the opening, and by disposing it between the reinforcing frame and the cover, the circuit board can be aligned and fixed while effectively using such narrow space, and wirings, semiconductor devices or the like can be installed on a certain portion of the vicinity of the opening.

Still further, the circuit board is stably fixed by attaching the circuit board to the reinforcing frame, thereby eliminating movement of the circuit board due to vibration or the like, and circuit failure such as loose connection of semiconductor devices, wirings or the like installed on the board will not occur.

Further, by fitting the light guiding plate and the first liquid crystal display panel into the picture frame-shaped frame body, provision for a member for fixing the first liquid crystal display panel is no longer necessary, thereby simplifying assembly of the liquid crystal display panel, while improving its mechanical strength.

Preferred embodiments of the present invention will be described hereafter with reference to the drawings. However, while the embodiments illustrated below exemplify the liquid crystal display device according to the technical concept of the present invention, these embodiments are not intended to restrict the present invention to such liquid crystal display device, since other embodiments are equally applicable.

### BRIEF DESCRIPTION OF THE DRAWINGS

Fig. 1 is an exploded perspective view showing the liquid crystal display device according to one embodiment of the present invention.
Fig. 2 shows the assembly of the liquid crystal display device of Fig. 1, where Fig. 2A is a plane view and Fig. 2B is a cross-sectional view taken along IIB-IIB line of Fig. 2A.
Fig. 3 shows a circuit board installed in the liquid crystal display device of the present invention, where Figs. 3A and 3B are front face and rear face perspective views, thereof, respectively.
Fig. 4 shows a sheet metal frame installed in the liquid crystal display device of the present invention, where Figs. 4A and 4B are front face and rear perspective views thereof, respectively.
Fig. 5 illustrates a conventional folding type mobile phone, where Fig. 5A is a perspective view of the phone viewed from one direction when it is open or in use, and Fig. 5B is a perspective view of the phone viewed from another direction.
Fig. 6 is a side view schematically showing a publicly known liquid crystal display panel used in this type of folding type mobile phone.
Fig. 7 is an exploded perspective view of a conventional double-sided liquid crystal display device.

The present invention refers to a liquid crystal display device equipped with a double-side emission type light guiding plate, and in particular, a liquid crystal display device 10 that includes a light guiding plate 11 which leads out light severally to both of the front and rear faces of the light guiding plate, a first liquid crystal display panel 15 disposed on the front face 11 a of the light guiding plate 11, and a smaller second liquid crystal display panel 30 disposed on the rear face 11b of the light guiding plate 11. The device is constituted in such manner that a sheet metal frame (reinforcing frame) 25 having a thin plate shape and substantially the same size as that of the light guiding plate 11 and an opening 26 having substantially the same size as that of the display surface of the second liquid crystal display panel 30 is brought into contact with the rear face 11b of the light guiding plate 11, whereby the first liquid crystal display panel 15, the light guiding plate 11 and the second liquid crystal display panel 30 are stacked, and a cover 40 covers the stacked body consisting of the light guiding plate and the panels and affixes it to expose the surface of the second liquid crystal display panel 30 from an opening 42 provided in the cover 40.

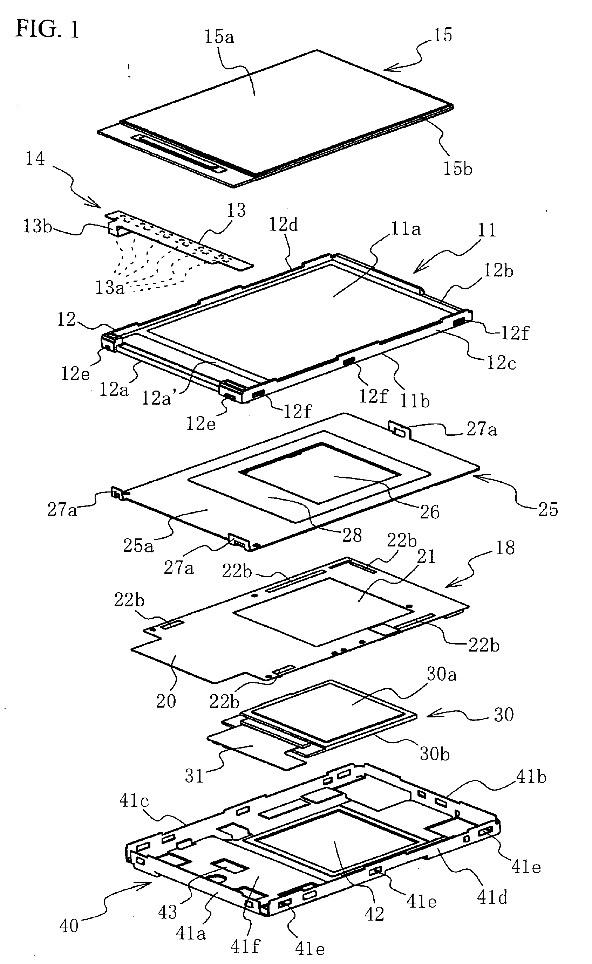

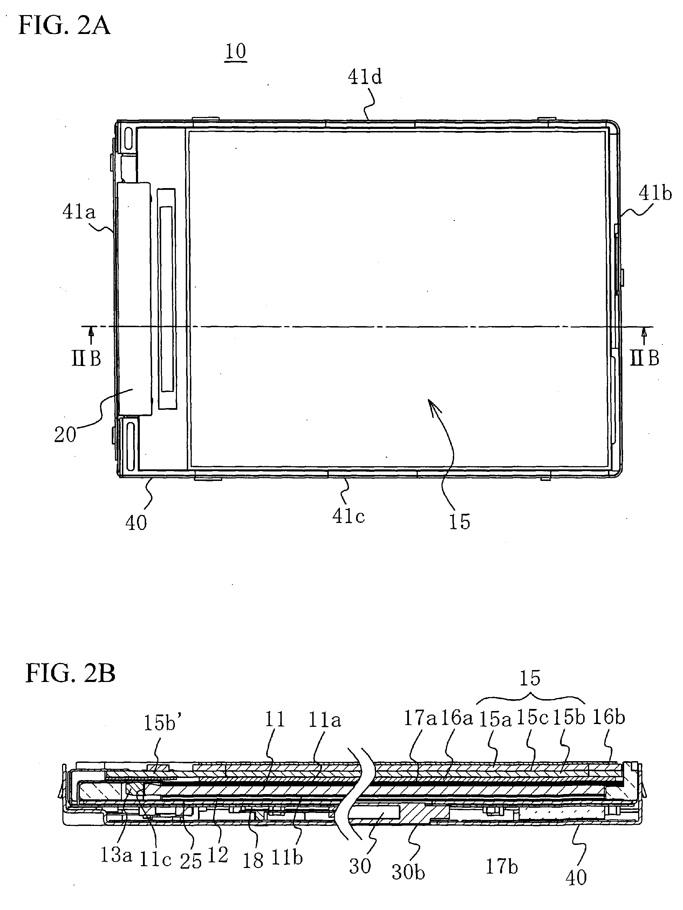

As shown in Fig. 1 and Fig. 2, the light guiding plate 11, made of a thin plate shaped body of transparent material, leads light, which is output from a light source 14, from one end portion 11c to the inner portion of the light guiding plate, and leads the light toward the front face 11a (to the first liquid crystal display panel 15) and the rear face 11b (to the second liquid crystal display panel 30) of the light guiding plate 11. The light guiding plate 11 is then fitted into a picture frame-shaped frame body 12. Acrylic resin material, for example, preferably with a thickness of about 0.6mm, may be used to form the light guiding plate.

The frame body 12, into which the light guiding plate 11 is fitted, is rectangular in shape and consists of frame pieces 12a to 12d having a predetermined width and height, and large enough to house the first liquid crystal display panel 15, the light guiding plate 11, optical sheets 17a, 17b and the light source 14, as shown in Figs. 1 and 2B.

Among the frame pieces 12a to 12d, the frame pieces 12c, 12d facing each other are extended so as to be longer than the light guiding plate 11, the frame piece 12a being provided in such manner that the tip thereof forms a gap 12a' between the frame piece 12a and the light guiding plate 11 when the light guiding plate 11 is fitted into the frame body 12. The light source 14 is inserted in the gap 12a' when the liquid crystal display panels are assembled.

The first liquid crystal display panel 15, the optical sheets 17a, 17b and the light guiding plate 11 are fitted into the picture frame-shaped frame body 12. One assembly is thus formed by fitting each of these parts into the frame body 12, thereby simplifying assembly of the liquid crystal display panels in the next process. In addition, a specific member for affixing the first liquid crystal display panel 15 is rendered unnecessary, thereby facilitating assembly of the liquid crystal display panels, while making them mechanically stronger and more durable.

In the light source 14, a plurality of LEDs (Light Emitting Diode) 13a are arrayed in line and attached to a strip of board 13, and power is supplied via a wiring 13b connected to the board. Note that description is based on the assumption that the light sources are LEDs, but are not limited to the same, such that a fluorescent lamp or the like, for example, may be used.

A semi-transmissive reflective liquid crystal display panel is used as the first liquid crystal display panel 15. As shown in Fig. 2(b), the first liquid crystal display panel 15 is constituted by filling the first and second boards 15a, 15b made of glass facing each other with liquid crystal 15c via a sealing material, thereby joining them together as a unit. The second board 15b which is longer than the first board 15a is set in such manner as to allow the end portion thereof to protrude from the edge of the first board 15a when the two boards are joined. Then, the light source 14 is attached to the rear surface of the protruding portion 15b'. A more detailed description of the semi-transmissive reflective liquid crystal display panel has been omitted because the type of panel used for the invention is already publicly known.

Further, polarizing plates 16a, 16b are severally disposed on the front and rear faces of the first liquid crystal display panel 15, and the optical sheet 17a consisting of either a light diffusion sheet, a prism sheet or the like is disposed between the first liquid crystal display panel 15 and the light guiding plate 11.

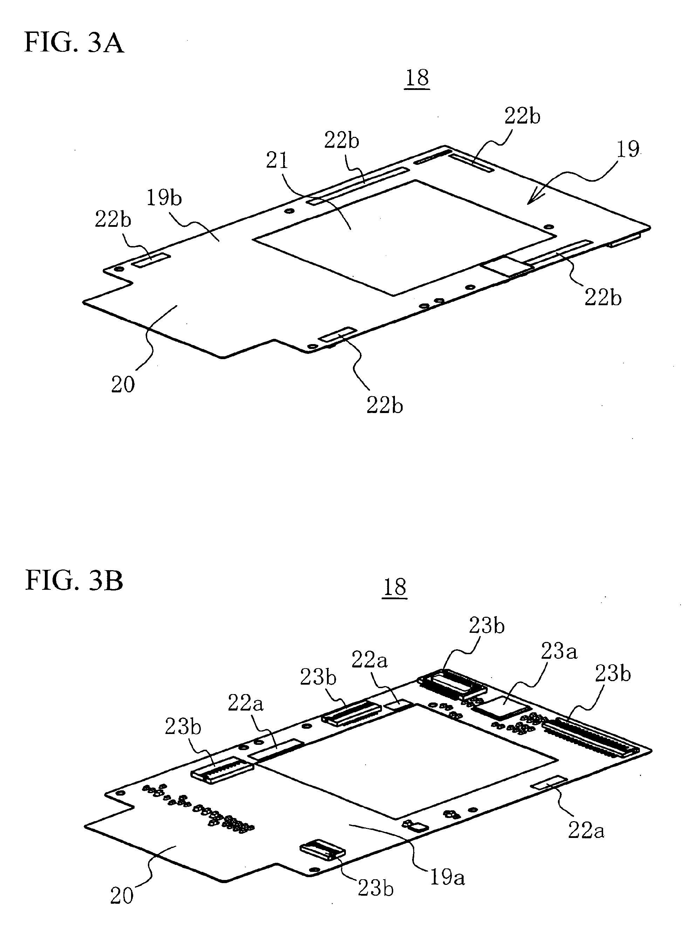

Thereafter, a circuit board 18, which is a flexible printed circuit (FPC) on which a graphic controller, a light source (LED) driver, a semiconductor device for driving liquid crystal, and the like are mounted, is connected to one end of the first liquid crystal display panel 15. As shown in Fig. 3, the circuit board 18 consists of a control board 19 having substantially the same size as that of the first liquid crystal display panel 15, and a connection portion 20 connecting the control board 19 to the first liquid crystal display panel 15. The circuit board 18 can be folded at the connection portion 20 when it is assembled.

Furthermore, in the circuit board 18, an opening 21 of substantially the same size as the display surface of the second liquid crystal display panel is provided on a part of the control board 19.

By providing the opening 21, the display surface of the second liquid crystal display panel is accommodated into the opening to dispose the panel between the reinforcing frame and the cover when they are assembled, so that the circuit board can be aligned and fixed while effectively using the narrow space, and wirings, semiconductor devices or the like can be installed on a certain portion of the vicinity of the opening.

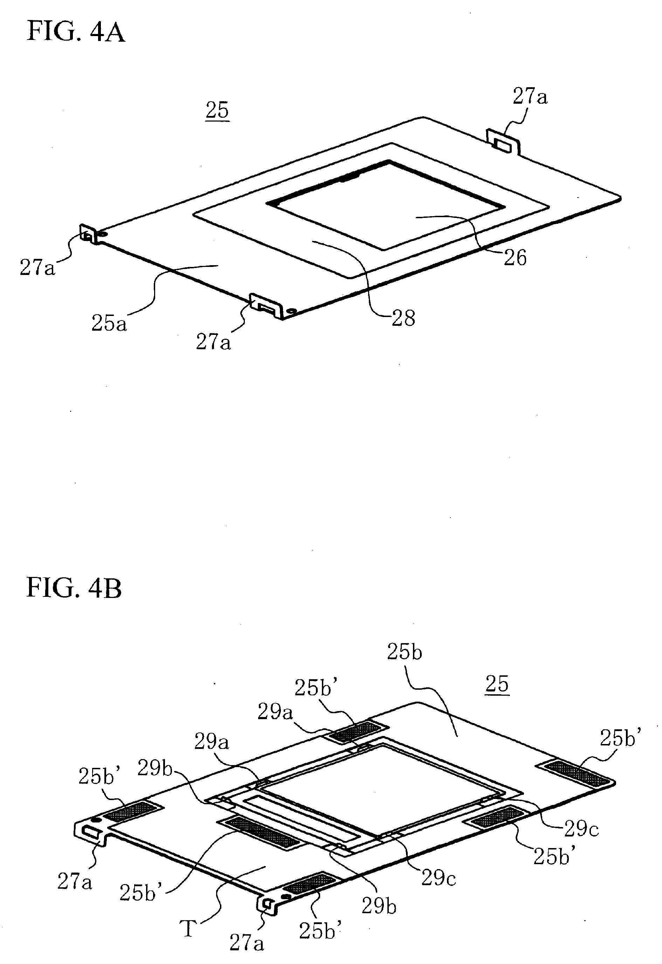

The front face 19b (refer to Fig. 3A) of the circuit board 18, that is, the surface contacting the rear face 25b (refer to Fig. 4B) of the sheet metal frame 25 is provided with a plurality of earth contact portions 22b, which are provided near the periphery of the circuit board.

Furthermore, on the rear face 19a of the circuit board 18, a semiconductor device 23a for driving liquid crystal and connectors 23b for external circuit connection and the like as well as a plurality of earth contact portions 22a are provided around the opening 21 of the circuit board. The earth contact portions 22a are interconnected with the earth contact portions 22b on the front face of the board, and the earth contact portions 22a, 22b are formed by applying a coating of conductive adhesive agent or attached using conductive adhesive tape.

A semi-transmissive liquid crystal display panel same is also used to form the second liquid crystal display panel 30, which is constituted by inserting or sandwiching a liquid crystal layer between a first board 30a and a second board 30b, both made of glass or the like facing each other and thereafter bonded together by a sealing material to form a unit. The second board 30b serves as a display service.

A flexible circuit board 31 is then connected to the second liquid crystal display panel 30, while the other end thereof is connected to the circuit board 18 via a connector.

The size of the sheet metal frame 25 is substantially the same as that of the picture frame-shaped frame body 12, and the size of its opening 26 is also substantially the same as that of the display surface of the second liquid crystal display panel 30 on the front face of the sheet metal frame 25. A plurality of hooking pieces 27a is made to reside on the peripheral edge thereof. The sheet metal frame 25 should preferably consist of thin metallic material such as aluminum, and have a thickness of about 0.2 mm.

On one side 25a of the sheet metal frame 25, that is, the side that makes contact with the light guiding plate 11, black tape 28 is applied within the vicinity of the opening 26 for the purpose of preventing the leakage of light.

Further, on the rear face 25b of the sheet metal frame 25, that is, the side on which the second liquid crystal display panel 30 is installed, a plurality of protruding pieces 29a, 29b, 29c jutting from the surface are formed on three sides on the peripheral edge of the opening 26. The protruding pieces 29a, 29b, 29c are made to come in contact with the outer peripheral surface of the second liquid crystal display panel 30 to align the same. The second liquid crystal display panel 30 and an optical sheet (not shown) provided on the rear face of the second liquid crystal display panel 30 are stably fixed by the protruding pieces 29a, 29b, 29c and the main body cover 40 (described later). Specifically, the second liquid crystal display panel 30 and the optical sheet provided on the rear face of the second liquid crystal display panel 30 are aligned on the three sides corresponding to the protruding pieces 29a, 29b, 29c covered by the main body cover 40, and set in place by pushing the outer periphery of the second liquid crystal display panel 30 against the periphery of the opening 42 provided in the main body cover 40. In this manner, an exclusive frame body for fixing the panel 30 or the like is rendered unnecessary, thereby simplifying the process of assembly.

As shown in Fig. 4(b), a plurality of earth contact portions 25b' are formed on the outer peripheral edges of the rear face 25b of the sheet metal frame 25, and double-faced adhesive tape T is adhered on areas excluding the electrodes 25b' and the opening 26. Each earth contact portion 25b' is formed on the frame by applying a coating of conductive adhesive agent or by affixing conductive adhesive tape thereon.

After attaching double-faced adhesive tape T on the rear face 25b of the sheet metal frame 25 and coating the earth contact portions 25b' with conductive adhesive agent, the circuit board 18 is then attached on one side of the double-faced adhesive tape T and the earth contact portions 22b of the circuit board 18 are adhered by means of the conductive adhesive agent during assembly of the liquid crystal display panel. Therefore, the circuit board 18 is firmly fixed on the sheet metal frame 25, and the earth contact portions 22b, 25b' are securely connected.

As described above, by using the sheet metal frame 25 made of metallic material, a predetermined mechanical strength is maintained as the sheet metal frame 25 is brought into contact with the light guiding plate 11, and they can be supported while being reinforced mechanically. Since the sheet metal frame 25 is made of metallic material or the like, its predetermined mechanical strength can be maintained even if it is thin, and therefore, the overall liquid crystal display device 10 can be made even thinner despite the addition of the sheet metal frame 25 and by making the thickness of the light guiding plate and the first and second liquid crystal display panels even thinner. In addition, if the optical sheet is laid between the metal frame 25 and the light guiding plate 11, the sheet metal frame 25 can smooth out the creases of the optical sheet as well as prevent the occurrence of creases. Moreover, because the sheet metal frame 25 is a conductive material, good electrical circuit connection can be formed between the circuit board 18 and the cover 40 (described later) and earth connection can thus be formed through such circuit connection.

Note that material for the sheet metal frame 25 is not limited to metallic material as it may comprise a sheet material made of resin or the like having a predetermined strength.

As shown in Figs. 1 and 2, the cover 40 serves as a cover for the stacked body formed by stacking the second liquid crystal display panel 30, the sheet metal frame 25, the light guiding plate 11, the first liquid crystal display panel 15, and the like. The cover 40 is made of metallic material in the shape of a shallow box having low-height side plates 41a to 41d lying on its outer periphery, has an opening 42 large enough to expose the display surface of the second liquid crystal display panel 30 on a bottom plate 41f, and a plurality of openings 43 from which the connectors 23b provided on the circuit board 18 are exposed. It is preferable that areas of the bottom plate 41f, which come into contact with the earth contact portions 22a of the circuit board 18, be made to protrude inwardly to form jutting portions (not shown) in order to improve contact with the earth contact portions 22a during assembly. Further, the metallic material of the sheet metal frame 25 would preferably be stainless steel material but may nevertheless be another kind of metallic or resin material.

The assembly of a liquid crystal display device including a double-side emission type light guiding plate will be described hereafter.

Firstly, the light guiding plate 11 is fitted into the picture frame-shaped frame body 12, and one or a plurality of optical sheets 17a are mounted on one side 11a of the fitted light guiding plate 11, and the first liquid crystal display panel 15 is fitted into the frame body 12 from above the optical sheet 17a. Further, one or a plurality of optical sheets 17b are also mounted on the other side 11b of the light guiding plate 11 in similar fashion, and a light-shielding sheet (not shown) having an opening to expose the display surface of the second liquid crystal display panel 30 is attached to the optical sheet 17b.

The light-shielding sheet intercepts light coming from the light guiding plate 11 to be irradiated to the outer periphery of the small second liquid crystal display panel 30. Further, by fitting the first liquid crystal display panel 15, the optical sheets 17a, 17b and the light guiding plate 11 into the picture frame-shaped frame body 12, these parts are housed into the frame body 12 to form one assembly, thereby simplifying the process of assembly of the liquid crystal display panel in the next stage. Additionally, because a member for stably fixing the first liquid crystal display panel is rendered unnecessary, assembly of the liquid crystal display panel is further simplified, while improving its mechanical strength.

Subsequently, the sheet metal frame 25 is brought into contact with the rear face of the light-shielding sheet of the assembly, and the frame is fixed by engaging the hooking pieces 27a of the sheet metal frame 25 with the hooking protrusions 12e of the frame body 12.

Further, the double-faced adhesive tape T is attached on the sheet metal frame 25 while a coating of conductive adhesive agent is applied to the earth contact portions 25b' in advance, and the second liquid crystal display panel is inserted and sandwiched between the protruding pieces 29a to 29c within the vicinity of the opening 26.

Then, the circuit board 18 is attached on one side of the double-faced adhesive tape T and the earth contact portions 22b of the circuit board 18 are electrically connected to the earth contact portions 25b' of the sheet metal frame 25 via the conductive adhesive agent.

The liquid crystal display panel assembled in this manner is covered by the metallic cover 40 from the direction of second liquid crystal display panel 30, the hooking holes 41e of the cover 40 being hooked to the hooking protrusions 12f of the frame body 12 to assemble the liquid crystal display device 10 including the double-side emission type light guiding plate. By covering the assembly with the cover 40 in the manner described above, the connectors 23b of the circuit board 18 are exposed from the openings provided on the cover 40, and connection to other units is achieved via the connectors 23b. Further, the earth contact portions 22a of the circuit board 18 are electrically connected to the inner wall surface of the cover 40.

Under this method of assembly, since the earth contact portions 22a, 22b of the circuit board 18 are electrically connected to the earth contact portions 25b' of the sheet metal frame 25 and the metallic cover 40, control of noise occurrence becomes possible. In addition, since the first and second liquid crystal display panels 15, 30 and the circuit board 18 are covered by the metallic cover 40, the entire assembly is shielded to minimize the effect of electromagnetic waves.

Having achieved the objective of producing a slimmer liquid crystal display device, mobile phones equipped with the above described liquid crystal display device 10 can likewise be made thinner, as shown in Fig. 5. Note that the liquid crystal display device 10 may be installed not only into mobile phones but may also be applied to other mobile information terminals such as PDAs.

## Claims

1. A liquid crystal display device where a first liquid crystal display panel is disposed on one side of a light guiding plate that leads out light severally to both of the front and rear sides of the light guiding plate, a second smaller liquid crystal display panel disposed on the other side of the light guiding plate, and the panels and the light guiding plate are stacked,
wherein a reinforcing frame comprising a thin plate, which is substantially of the same size as the light guiding plate and has an opening substantially as large as the display surface of the said second liquid crystal display panel, is laid between the said light guiding plate and the said second liquid crystal display panel, the said reinforcing frame being covered by a cover having an opening corresponding to the display surface of the second liquid crystal display panel, and the reinforcing frame and the said cover sandwich and fix the second liquid crystal display panel.

2. The liquid crystal display device according to Claim 1, wherein a plurality of protrusions being formed around the opening of the said reinforcing frame, and the second liquid crystal display panel being aligned by such protrusions.

3. The liquid crystal display device according to Claim 1 or 2, wherein the said reinforcing frame comprises a metal member.

4. The liquid crystal display device according to Claim 1 or 2, wherein a circuit board for installing semiconductor devices and the like for driving the said liquid crystal display panels is disposed between the said reinforcing frame and the said cover.

5. The liquid crystal display device according to Claim 4, wherein double-faced adhesive tape is attached to the surface of the said reinforcing frame, and the said circuit board is affixed on one side of the double-faced adhesive tape.

6. The liquid crystal display device according to Claim 1 or 2, wherein the display device includes a picture frame-shaped frame body, which is large enough to house the said light guiding plate or the like, and the light guiding plate, a light source irradiating light from one end thereof, and the said first liquid crystal display panel are fitted into the frame body.
